# EUROPEAN PATENT APPLICATION

(11) **EP 4 851 809 A2**
(43) Date of publication of application: **09.12.2026**
(21) Application number: 26177676.9
(22) Date of filing: 08.05.2026
(51) Int. Cl.: G06F 11/30, G06F 11/34

(54) **TUNABLE PERFORMANCE MONITORING FOR CLOUD-BASED CONTAINER PLATFORMS**

(30) Priority: 15.05.2025 US 202519209322
(71) Applicant: Microsoft Technology Licensing, LLC, Redmond, WA 98052 (US)
(72) Inventor: BAILEY, Ryan David, Redmond, 98052-6399 (US); AKHTAR, Md Nyeem, Redmond, 98052-6399 (US); BIGGS, Steven, Redmond, 98052-6399 (US); SHEASBY, Jennifer Claire, Redmond, 98052-6399 (US); SMITH, Lisa Alison, Redmond, 98052-6399 (US); CAIN, Alexander, Redmond, 98052-6399 (US); DEJAEGER, Darren Richard, Redmond, 98052-6399 (US); OGUNKOYA, Oluwaseye Adebayo, Redmond, 98052-6399 (US)
(74) Representative: CMS Cameron McKenna Nabarro Olswang LLP

(57) **Abstract**

Disclosed solutions provide tunable performance monitoring for cloud-based platforms. Examples use a workload with a predictable burden, so that performance impacts may be correlated with perturbation events. This speeds the identification of software faults (bugs) and allows accurate identification of whether service level agreements (SLAs) are being met. A special workload is created using a set of operators that place a predictable burden on the platform, enabling the burden (load or workload) to be tuned by turning various operators on/off and adjusting another parameter for operator events (e.g., pinging and I/O operations). This approach is lightweight, tests the platform itself, is tunable to different platforms' configurations, and the repeatable and consistent load permits accurate comparisons between multiple tests (i.e., before/after comparisons for platform changes). Metrics are emitted, which may be analyzed in real-time or retrospectively, and the solutions may be used in both ongoing monitoring and resiliency testing.

## Description

### BACKGROUND

Containers provide consistent and isolated execution environments for software packages, including runtime libraries and system tools. This enables software packages to run on multiple different underlying computing hardware and operating systems (OSs), without requiring changes to the software packages themselves. Such an approach significantly simplifies deployment.

Several cloud solutions deliver a managed container service (e.g., Kubernetes) to their users. However, when developing cloud solutions it is valuable to be able to measure and assess the availability and performance (e.g., interruption recovery time) of the platform from the perspective of a customer workload. Measurements have value when there is a repeatable, consistent, and reliable framework in which the measurements are made, that extends across the services the platform offers. Correlating performance impacts with perturbations to the computing environment becomes challenging when the measurements are affected by unpredictable variations in the workload being monitored.

### SUMMARY

The disclosed examples are described in detail below with reference to the accompanying drawing figures listed below. The following summary is provided to illustrate some examples disclosed herein.

Solutions disclosed herein provide tunable performance monitoring for cloud-based platforms. Examples generate, by a container orchestration monitoring pod, a load against a monitored platform, wherein a monitored software executes on the monitored platform, wherein the container orchestration monitoring pod comprises a plurality of operators, and wherein the load is set to a first predetermined level according to a configuration map; generate, by the plurality of operators, first metrics indicating performance of the monitored platform at the first predetermined level; export the first metrics to an assessment service; while the container orchestration monitoring pod and the monitored software continue to execute, tune the load from the first predetermined level to a second predetermined level, wherein tuning the load comprises changing a parameter within the configuration map; generate, by the plurality of operators, second metrics indicating performance of the monitored platform at the second predetermined level; and export the second metrics to the assessment service.

### BRIEF DESCRIPTION OF THE DRAWINGS

The disclosed examples are described in detail below with reference to the accompanying drawing figures listed below:
FIG. 1 illustrates an example architecture that advantageously provides tunable performance monitoring for cloud-based platforms;
FIG. 2 illustrates an alternative use case for examples of the architecture of FIG. 1;
FIG. 3 illustrates further detail for a configuration map, as may be used in examples of the architecture of FIG. 1;
FIG. 4 illustrates further detail for a performance report, as may be generated by examples of the architecture of FIG. 1;
FIGs. 5 and 6 show flowcharts illustrating exemplary operations that may be performed when using example architectures, such as the architecture of FIG. 1; and
FIG. 7 shows a block diagram of an example computing device suitable for implementing some of the various examples disclosed herein.

Corresponding reference characters indicate corresponding parts throughout the drawings.

### DETAILED DESCRIPTION

Disclosed solutions provide tunable performance monitoring for cloud-based platforms. Examples use a workload with a predictable burden, so that performance impacts may be correlated with perturbation events. This speeds the identification of software faults (bugs) and allows accurate identification of whether service level agreements (SLAs) are being met. A special workload is created using a set of operators that place a predictable burden on the platform, enabling the burden (load or workload) to be tuned by turning various operators on/off, adjusting a parameter for operator events (e.g., pinging interval, a rate of operations, such as 1000 or 2000 I/O operations per second). This approach is lightweight, tests the platform itself, it tunable to different platforms' configurations, and the repeatable and consistent load permits accurate comparisons between multiple tests (i.e., before/after comparisons for platform changes). Metrics are emitted and logged, which may be analyzed in real-time or retrospectively, and the solution may be used for ongoing monitoring, resiliency testing and other forms of platform validation and testing.

In some examples, the special workload is a scalable set of Kubernetes pods that simulates a customer workload from the perspective of the monitored platform (except for being predictable and consistent) and which can be configured to generate pre-determined levels of load against the platform and emit metrics indicating the level of success or failure of these operations on an ongoing basis. Various metrics may include timing information, success versus failure for an operator, or performance level, such as operations achieved per second, latency, counts of data integrity failures, and an error count. Essentially, the metrics indicate the level of platform performance, such as working as normal, partially disrupted, and if so to what degree. The level of load is tunable to the platform it is being run on (e.g. smaller systems may require less load). The number of pods making up the deployment may also be dynamically scaled. The metrics from this simulated workload are then scraped using standard metrics tooling (e.g., open-source offerings, such as Prometheus) and used in monitoring dashboards on an ongoing basis to identify whether there were any unexpected issues in the platform. The metrics may be automatically analyzed as part of resiliency testing, where faults are injected in order to measure the recovery time that customers would experience or to alert developers to a failure. The metrics permit validation that platform recovery times for failures are within SLAs and/or customer requirements, and may be collected either as part of resiliency testing and/or as ongoing monitoring.

Because the solutions are lightweight, deployment is rapid and easier to deploy and manage when compared with real workloads. The repeatable and consistent load, which is not a reliable characteristic of real customer workload, allows comparisons between multiple runs, making the metrics easier to analyze because of the consistent load. The solutions are designed to test the platform itself and may be configured and tuned to generate the desired levels of load, allowing the load to be adapted to the hardware on which it is being run, and test all areas of the platform at the same time. The emitted metrics may be used for real-time or retrospective analysis. The solutions are extensible, designed to enable easy extension to add new types of testing.

Aspects of the disclosure solve multiple problems that are necessarily rooted in computer technology, and render use of computing platforms more reliable and better-performing, by providing the practical result of improved diagnostic monitoring and testing results. For example, because the metrics are emitted with predetermined workloads, not only can the testing be tuned to the platform capabilities, but meaningful before/after testing results may be compared and used for tuning the platform capabilities and locating software bugs. These advantageous results are accomplished, at least in part, by tuning a load from a one predetermined level to another level.

The various examples will be described in detail with reference to the accompanying drawings. Wherever preferable, the same reference numbers will be used throughout the drawings to refer to the same or like parts. References made throughout this disclosure relating to specific examples and implementations are provided solely for illustrative purposes but, unless indicated to the contrary, are not meant to limit all examples.

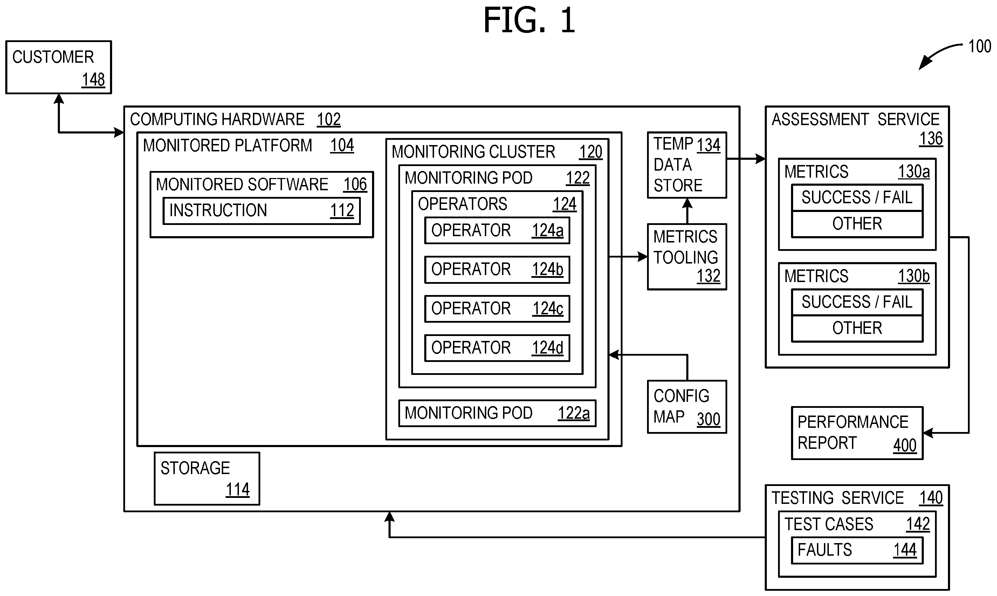

FIG. 1 illustrates an example architecture 100 that advantageously provides tunable performance monitoring for cloud-based platforms. A customer 148 is using a cloud service that uses computing hardware 102. A monitored platform 104 (e.g., a cloud platform) runs on underlying computing hardware 102, and hosts monitored software 106 (which executes on, and provides the functionality of monitored platform 104). Monitored software 106 is illustrated as having a software instruction 112, which may be identified as containing a software bug as a result of the performance monitoring, as described below. Monitored software 106 uses a storage medium 114, provided in the underlying computing hardware 102.

A monitoring cluster 120 hosts a container orchestration monitoring pod 122 that performs monitoring of monitored platform 104, as described below. In some examples, monitoring cluster 120 is hosted on monitored platform 104. Container orchestration monitoring pod 122 has a plurality of operators 124 that generate a special workload that may be reliably set to a predetermined level. In some examples, plurality of operators 124 includes an operator 124a which is a storage read/write operation, an operator 124b which is a storage data integrity check, an operator 124c which is a network availability check, and an operator 124d which is a domain name server (DNS) check. Other operators may also be used. Some examples may have multiple container orchestration monitoring pods, such as container orchestration monitoring pod 122 and another container orchestration monitoring pod 122a.

Operator 124a (storage read/write operation) generates a load (burden) on monitored platform 104 by performing read and write operations, and some examples may use a flexible input/output (FIO) tool. The read and write operations have known, predictable, and repeatable burdens, enabling the load generated by operator 124a to be tuned (adjusted) by turning operator 124a on or off, changing the rate of operations (e.g., 1000 or 2000 I/O operations per second), and/or other changes that change the load. For example, increasing the rate of ping operations increases the frequency, raising the load (the level of the burden), whereas decreasing the rate between ping operations reduces the load.

Operator 124b (storage data integrity check) is a platform availability/stability check, but does contribute somewhat to the load on monitored platform 104 by writing random data on each invocation and then reading it back after a period of time to confirm it hasn't changed. This is also a known, predictable, and repeatable burden, and the load generated by operator 124b may be tuned by turning operator 124b on or off, and/or by adjusting a time interval of how often to retrieve the integrity data.

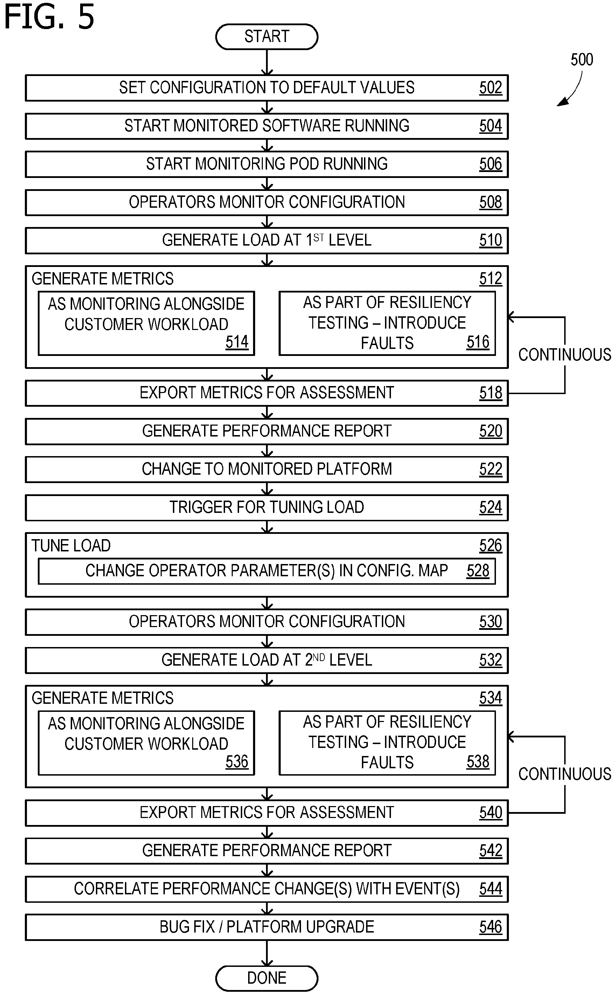

Operator 124c (network availability check) generates a load on monitored platform 104 by having the container orchestration monitoring pods on monitoring cluster (e.g., container orchestration monitoring pod 122 and container orchestration monitoring pod 122a) ping each other. This is described in further detail in relation to FIG. 5, and also results in a known, predictable, and repeatable burden. The load generated by operator 124c may be tuned by turning operator 124c on or off, and/or another adjustment. Operator 124d (DNS check) generates a load on monitored platform 104 by performing DNS lookups to a configured domain (e.g. bing.com) and confirming that a response is received.

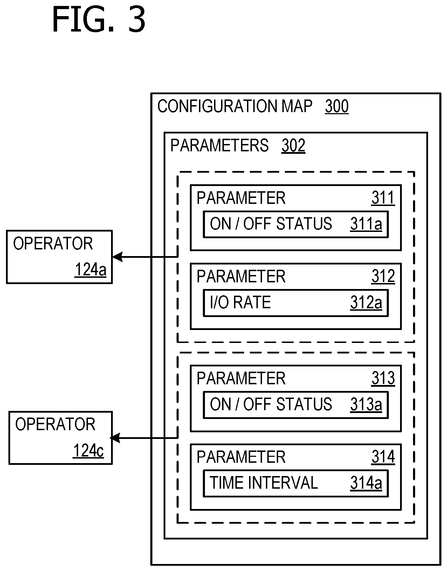

A configuration map 300, which is shown in further detail in FIG. 3 holds the parameters that specify which of plurality of operators 124 are to be turned on or off, and another parameter, along with other information that may be needed by some more specialized operators. This enables the load generated by container orchestration monitoring pod 122 against monitored platform 104 to be tuned to various levels, which may be predetermined.

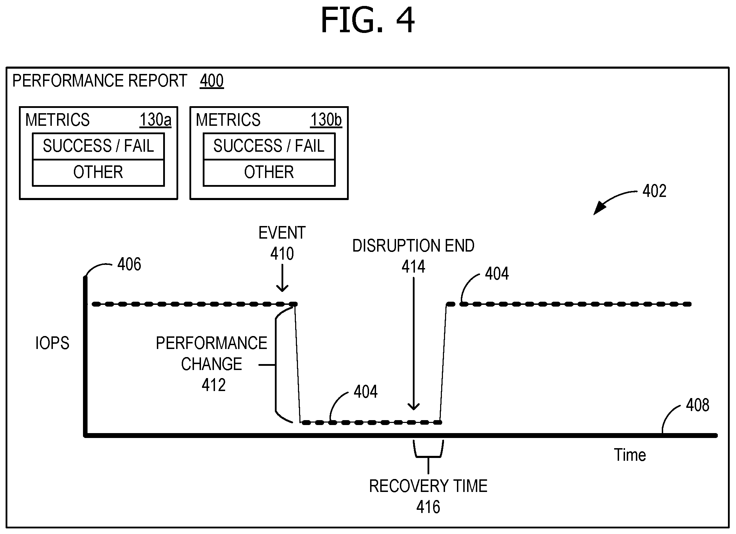

A metrics tooling 132 scrapes metrics from container orchestration monitoring pod 122 for temporary cache storage in a metrics storage 134 (shown as a temporary data store), until pushed to assessment service 136. As shown a first set of metrics 130a is emitted when using a first load level, and a second set of metrics 130b is emitted when using a second load level. In general, metrics 130a and metrics 130b indicate success versus failure or timeout, number of operations per second or other timing information, timing information, latency, counts of data integrity failures, and/or an error count for the various operators used, where relevant. For example, when operator 124c (network availability check) causes container orchestration monitoring pod 122 to ping container orchestration monitoring pod 122a and any other container orchestration monitoring pods executing on monitoring cluster 120 (and the reverse, i.e., they may all ping each other)), and metrics 130a may indicates both success versus failure and may (if successful) optionally further indicate the time elapsed until a response is received from the ping. Assessment service 136 uses metrics 130a and/or metrics 130b to generate a performance report 400, which is shown in further detail in FIG. 4.

There are at least two dominant use cases for architecture 100. One is resilience testing, such as identifying recovery time from perturbations, and which includes bug testing, to identify a potential bug in monitored software 106 (which may then be traced to software instruction 112). As shown in FIG. 1, a testing service 140, which may be automated or human, performs resilience testing according to test cases 142, which involve introducing faults 144 to the monitored software 106 which makes up monitored platform 104 (e.g. triggering a software crash) or to the underlying computing hardware 102 (e.g. abruptly powering down a server). The use of testing service 140 is one of multiple possible use cases, of which other use cases involve ongoing monitoring (rather than active testing).

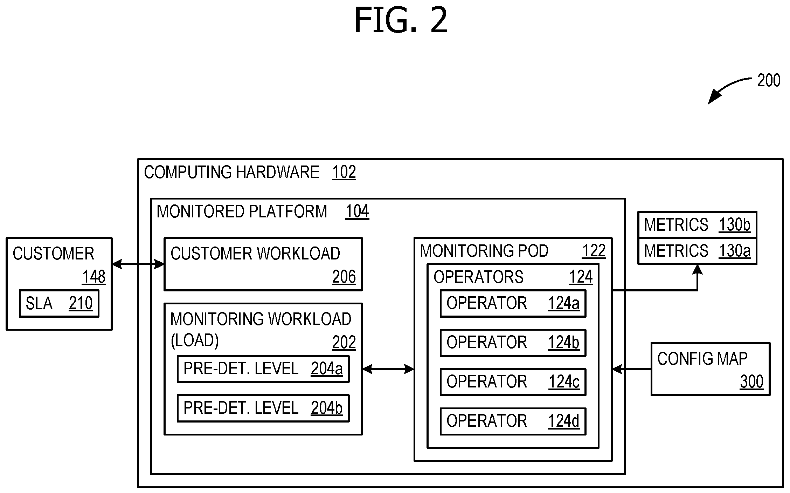

Another use case, ongoing monitoring alongside a real customer workload, is shown in FIG. 2 as a use case scenario 200. In FIG. 2, customer 148 is using monitored platform 104 for a customer workload 206, and expects monitored platform 104 to perform according to an SLA 210. SLA 210 may specify reliability and availability of monitored platform 104, and may include details such as recovery time from outages or other interruptions.

Container orchestration monitoring pod 122 generates a load 202, which is a dummy workload producing a predictable, repeatable burden on monitored platform 104. That is, load 202 simulates a customer workload, but with a controllable burden that is set using configuration map 300. For example, certain parameter settings within configuration map 300 set load to predetermined level 204a, whereas different parameter settings within configuration map 300 set load to predetermined level 204b. It should be understood that, although load 202, predetermined level 204a, predetermined level 204b, and customer workload 206 are shown in FIG. 2 for illustrative purposes, these are actually notional constructs and are not tangible.

FIG. 3 illustrates further detail for configuration map300. Configuration map 300 has parameters 302, which are used to control the level of load contributed by plurality of operators 124. As shown, parameters 302 has a parameter 311 and a parameter 312 for operator 124a, and a parameter 313 and a parameter 314 for operator 124b. Other parameters (not shown) are for operators 124c and 124d. Parameter 311 indicates an on/off status 311a for operator 124a, and parameter 311 indicates a rate of I/O operations 312a for operator 124a to perform. Parameter 313 indicates an on/off status 313a for operator 124b, and parameter 314 indicates a time interval 314a between operator events for operator 124b. Other parameters may be used for some addresses, such as DNS name, IP address, number of operations per second, amount of data written, and others.

Because each of plurality of operators 124 is known to have a fairly consistent and predictable burden, load 202 is predictable (i.e., predetermined) when a given set of operators is turned on with certain parameters. Although the prediction may not be exactly perfect, it is within a fair degree of tolerance. For example, with both on/off status 311a and on/off status 313a set to on, and both rate of I/O operations 312a and time interval 314a set to relatively burdensome values, load 202 is high. Toggling either on/off status 311a or on/off status 313a set to off, and/or setting both rate of I/O operations 312a and time interval 314a set to relatively light values, load 202 is lowered.

FIG. 4 illustrates further detail for performance report 400. Performance report 400 may have metrics 130a and/or metrics 130b in tabular and/or graphical form, or another presentation format suitable for the particular operators (e.g., latency, counts, etc.). There may also be annotations and interpretations of the data received. A graphical plot 402 is shown of input/output operations per second (IOPS) results 404, as may be generated by operator 124a (storage read/write operation). IOPS results 404 are plotted against an IOPS axis 406 and a time axis 408.

An event 410, which may be one of faults 144, occurs, leading to a performance change 412, shown as a drop in IOPS results 404 a short time later. Upon the fault clearing, shown as a disruption end 414, the drop in IOPS results 404 disappears and IOPS results 404 returns to its previous values. A recovery time 416 is the delay between disruption end 414 and the time at which IOPS results 404 returns to its previous values. Recovery time 416 may be compared with SLA 210 to identify whether monitored platform 104 requires upgrade (e.g., a bug exists). If IOPS results 404 had instead been collected using an unpredictable load, such as using real customer workload 206, instead of load 202 (which is tunable and predictable), recovery time 416 may be influenced by variations in customer workload 206.

The use of an unpredictable load while monitoring performance makes it difficult to determine accurately whether monitored platform 104 truly does require an upgrade. However, use of load 202 alleviates this problem, and because it is predictable, recovery time 416 will be consistently based on underlying system performance, so that an accurate determination of whether monitored platform 104 requires an upgrade may be made. Load 202 is isolated from other processes, such as customer workload 206, which may also be running on the same monitored platform 104, except for in rare instances of monitored platform 104 being tasked beyond its capacity. Container pods, such as Kubernetes pods, are able to provide this type of isolation.

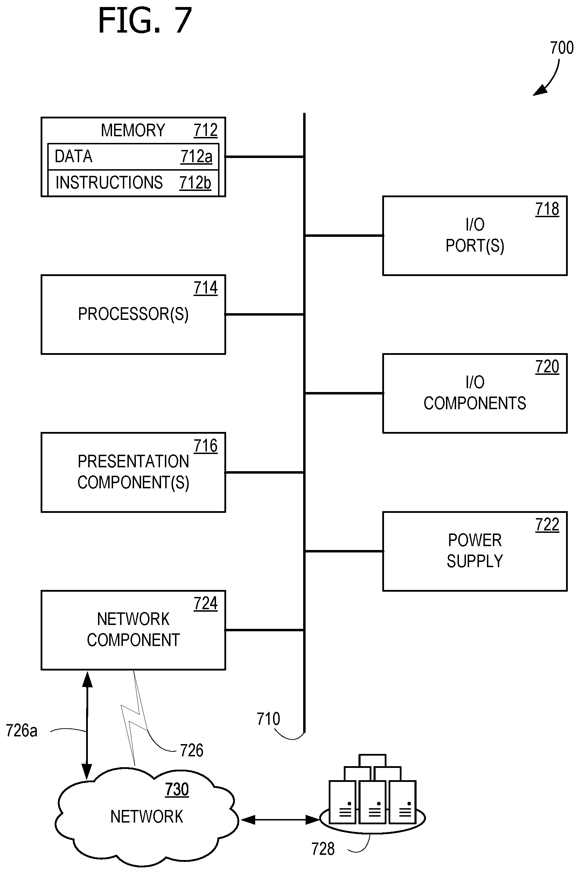

FIG. 5 shows a flowchart 500 illustrating exemplary operations that may be performed by architecture 100. In some examples, operations described for flowchart 500 are performed by computing device 700 of FIG. 7. Flowchart 500 commences with setting configuration map 300 to default values in operation 502. Monitored software 106 begins executing on monitored platform 104 in operation 504. Container orchestration monitoring pod 122 begins executing in operation 506.

Upon starting, as part of operation 508, the operators of plurality of operators 124 each receives its associated parameters from configuration map 300. In some examples, at least some of the operators read configuration map 300, although in some examples, a main top-level process (one per container orchestration monitoring pod) reads configuration map 300 and calls each operator with its parameters. For example, operator 124a receives parameter 311 and parameter 312 and operator 124b receives parameter 313 and parameter 314, such as when they are invoked by the top-level process. The top-level process monitors configuration map 300 for changes on an ongoing basis (while container orchestration monitoring pod 122 remains executing).

In operation 510, container orchestration monitoring pod 122 generates load 202 against monitored platform 104, with load 202 initially set to predetermined level 204a according to configuration map 300. The different operators perform different functions. For example, operator 124c (network availability check) first reaches out to a Kubernetes API server on the host to find all other pods of deployed container orchestration monitoring pod on monitoring cluster 120. This is performed using pod labels that were applied as part of the installation process. Once all of the other pods have been located, their internet protocol (IP) addresses are identified. Ping tests are then performed against each of the IPs to confirm network connectivity. Connectivity metrics, such as success/failure, time to respond, and/or other performance metrics are then reported (initially in metrics 130a and then, at a later time, metrics 130b) for each pod to each other pod. The identification of all of the other pods is performed each time operator 124c runs, because the count of deployed container orchestration monitoring pods may change dynamically, or a pod may have moved which would change its IP address.

Plurality of operators 124 generates metrics 130a, indicating performance of monitored platform 104 at predetermined level 204a, in operation 512. Depending on the use case, whether flowchart 500 is for resiliency testing or for performance monitoring, operation 512 may use either operation 514 or operation 516. Operation 514 is used for live monitoring, to provide a performance level indication for customer workload 206, and metrics 130a are generated concurrently with customer workload 206 executing on monitored platform 104. However, operation 516 is used for resiliency testing of monitored software 106, and metrics 130a are generated concurrently with testing service 140 triggering faults 144 on monitored platform 104.

Container orchestration monitoring pod 122 exports metrics 130a to assessment service 136 in operation 518, and assessment service 136 generates performance report 400 for monitored platform 104 using metrics 130a in operation 520. At this stage, if performance report 400 indicates an immediate need for making an update to monitored software 106 (see operation 546) that may be accomplished here. However, in this particular described example, performance report 400 is generated to form a baseline performance measurement, and the update to monitored software 106 will occur later, as described below.

At a later time, a dynamic change occurs in operation 522, such as dynamically changing a count of deployed orchestration container monitoring pods by adding or removing pods, adding or removing storage, or another change. This is a trigger for tuning load 202 in operation 524. A trigger event may be any of: a change in a count of deployed container orchestration monitoring pods, a change in storage used by monitored platform 104, adding new software that executes within a monitored platform 104, or another event.

The tuning of load 202 is operation 526, which adjusts load 202 from predetermined level 204a to predetermined level 204b, while container orchestration monitoring pod 122 and monitored software 106 continue to execute. This is accomplished using operation 528, which changes a parameter within configuration map 300. For example, parameter 311 may be changed to toggle operator 124a between off and on, and/or parameter 311 may be changed to alter the rate of I/O operations 312a for operator 124a. In some examples, the amount of data written or read by operator 124a (storage read/write operation) may be changed.

In operation 530, the operators of plurality of operators 124 monitor parameter 311 for another change to configuration map 300, essentially continuing operation 508. Container orchestration monitoring pod 122 generates load 202 against monitored platform 104 in operation 532, but now set to predetermined level 204b according to the new parameter values in configuration map 300. In operation 534, plurality of operators 124 generates metrics 130b indicating performance of monitored platform 104 at predetermined level 204b. Operation 534 may use either operation 536 or operation 538, which are equivalent to operation 514 and operation 516, respectively. Container orchestration monitoring pod 122 exports metrics 130b to assessment service 136 in operation 540, and assessment service 136 generates performance report 400 for monitored platform 104 using metrics 130b in operation 542.

Operation 544 correlates performance change 412 indicated within performance report 400 with event 410 (e.g. one of faults 144 or another event) experienced by monitored software 106. In some examples, a version of performance report 400 is generated with monitored platform 104 in a first configuration, and another version of performance report 400 is generated with monitored platform 104 in a second configuration. The different versions of performance report 400 are compared to identify any discrepancies and/or errors. Operation 546 performs a remedial action to address any problems identified in performance report 400. For example, software instruction 112 within monitored software 106, may be altered if it is determined that performance change 412 is a result of a bug. Alternatively, or in addition, monitored platform 104 may be altered by adding more storage, memory, or processing power, in order to meet requirements of SLA 210.

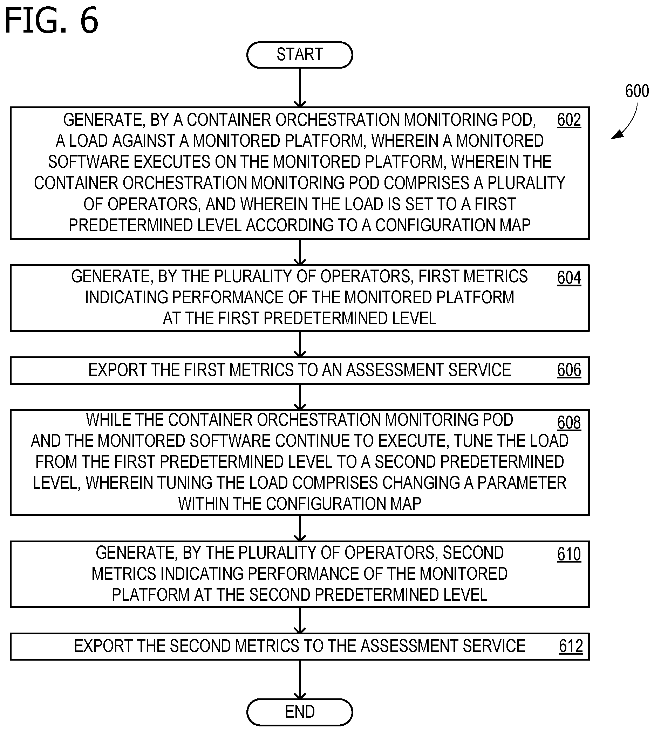

FIG. 6 shows a flowchart 600 illustrating exemplary operations that may be performed by architecture 100. In some examples, operations described for flowchart 600 are performed by computing device 700 of FIG. 7. Flowchart 600a commences with operation 602, which includes generating, by a container orchestration monitoring pod, a load against a monitored platform, wherein a monitored software executes on the monitored platform, wherein the container orchestration monitoring pod comprises a plurality of operators, and wherein the load is set to a first predetermined level according to a configuration map.

Operation 604 includes generating, by the plurality of operators, first metrics indicating performance of the monitored platform at the first predetermined level. Operation 606 includes exporting the first metrics to an assessment service. Operation 608 includes, while the container orchestration monitoring pod and the monitored software continue to execute, tuning the load from the first predetermined level to a second predetermined level, wherein tuning the load comprises changing a parameter within the configuration map. Operation 610 includes generating, by the plurality of operators, second metrics indicating performance of the monitored platform at the second predetermined level. Operation 612 includes exporting the second metrics to the assessment service.

### Additional Examples

An example system comprises: a processor; and a computer-readable medium storing instructions that are operative upon execution by the processor to: generate, by a container orchestration monitoring pod, a load against a monitored platform, wherein a monitored software executes on the monitored platform, wherein the container orchestration monitoring pod comprises a plurality of operators, and wherein the load is set to a first predetermined level according to a configuration map; generate, by the plurality of operators, first metrics indicating performance of the monitored platform at the first predetermined level; export the first metrics to an assessment service; while the container orchestration monitoring pod and the monitored software continue to execute, tune the load from the first predetermined level to a second predetermined level, wherein tuning the load comprises changing a parameter within the configuration map; generate, by the plurality of operators, second metrics indicating performance of the monitored platform at the second predetermined level; and export the second metrics to the assessment service.

An example computer-implemented method comprises: generating, by a container orchestration monitoring pod, a load against a monitored platform, wherein a monitored software executes on the monitored platform, wherein the container orchestration monitoring pod comprises a plurality of operators, and wherein the load is set to a first predetermined level according to a configuration map; generating, by the plurality of operators, first metrics indicating performance of the monitored platform at the first predetermined level; exporting the first metrics to an assessment service; while the container orchestration monitoring pod and the monitored software continue to execute, tuning the load from the first predetermined level to a second predetermined level, wherein tuning the load comprises changing a parameter within the configuration map; generating, by the plurality of operators, second metrics indicating performance of the monitored platform at the second predetermined level; and exporting the second metrics to the assessment service.

One or more example computer storage devices has computer-executable instructions stored thereon, which, on execution by a computer, cause the computer to perform operations comprising: generating, by a container orchestration monitoring pod, a load against a monitored platform, wherein a monitored software executes on the monitored platform, wherein the container orchestration monitoring pod comprises a plurality of operators, and wherein the load is set to a first predetermined level according to a configuration map; generating, by the plurality of operators, first metrics indicating performance of the monitored platform at the first predetermined level; exporting the first metrics to an assessment service; while the container orchestration monitoring pod and the monitored software continue to execute, tuning the load from the first predetermined level to a second predetermined level, wherein tuning the load comprises changing a parameter within the configuration map; generating, by the plurality of operators, second metrics indicating performance of the monitored platform at the second predetermined level; and exporting the second metrics to the assessment service.

Alternatively, or in addition to the other examples described herein, examples include any combination of the following:
- generating, by the assessment service, a performance report for the monitored platform using the first metrics and/or the second metrics;
- correlating a performance change indicated within the performance report with an event experienced by the monitored platform;
- based on at least the performance change, altering a software instruction within the monitored software;
- generating the first metrics and the second metrics concurrently with a customer workload executing on the monitored platform; generating the first metrics and the second metrics concurrently with the customer workload executing provides a performance level indication for the monitored platform;
- generating the first metrics and the second metrics concurrently with triggering faults on the monitored platform;
- generating the first metrics and the second metrics concurrently with triggering the faults comprises at least a portion of resiliency testing for the monitored platform;
- the parameters within the configuration map comprise a first parameter indicating, for a first operator of the plurality of operators, an on/off status;
- tuning the load from the first predetermined level to the second predetermined level comprises changing the first parameter to toggle the first operator between off and on or change a time interval between operator events of the first operator;
- the first metrics and/or the second metrics indicate any of success versus failure for an operator and a performance level (operations achieved per second, latency, and an error count);
- monitoring, by the first operator, on an ongoing basis, the first parameter for a change;
- the plurality of operators comprises at least two operators selected from the list consisting of: a storage read/write operation, a storage data integrity check, a network availability check, and a DNS check;
- the plurality of operators comprises the network availability check, and the network availability check comprises the container orchestration monitoring pod pinging another container orchestration monitoring pod ;
- the plurality of operators comprises the storage read/write operation;
- the storage read/write operation performs read and/or write operations at a specified rate;
- the load generated against the monitored platform comprises a dummy workload producing a predictable, repeatable burden on the monitored platform;
- the monitored software executes in the monitored cluster;
- the container orchestration monitoring pod comprises a Kubernetes pod;
- the monitored platform comprises a cloud-based computing platform; and
- dynamically changing a count of deployed container orchestration pods.

While the aspects of the disclosure have been described in terms of various examples with their associated operations, a person skilled in the art would appreciate that a combination of operations from any number of different examples is also within scope of the aspects of the disclosure.

### Example Operating Environment

FIG. 7 is a block diagram of an example computing device 700 (e.g., a computer storage device) for implementing aspects disclosed herein, and is designated generally as computing device 700. In some examples, one or more computing devices 700 are provided for an on-premises computing solution. In some examples, one or more computing devices 700 are provided as a cloud computing solution. In some examples, a combination of on-premises and cloud computing solutions are used. Computing device 700 is but one example of a suitable computing environment and is not intended to suggest any limitation as to the scope of use or functionality of the examples disclosed herein, whether used singly or as part of a larger set.

Neither should computing device 700 be interpreted as having any dependency or requirement relating to any one or combination of components/modules illustrated. The examples disclosed herein may be described in the general context of computer code or machine-useable instructions, including computer-executable instructions such as program components, being executed by a computer or other machine, such as a personal data assistant or other handheld device. Generally, program components including routines, programs, objects, components, data structures, and the like, refer to code that performs particular tasks, or implement particular abstract data types. The disclosed examples may be practiced in a variety of system configurations, including personal computers, laptops, smart phones, mobile tablets, hand-held devices, consumer electronics, specialty computing devices, etc. The disclosed examples may also be practiced in distributed computing environments when tasks are performed by remote-processing devices that are linked through a communications network.

Computing device 700 includes a bus 710 that directly or indirectly couples the following devices: computer storage memory 712 (i.e., a computer-readable medium), one or more processors 714, one or more presentation components 716, input/output (I/O) ports 718, I/O components 720, a power supply 722, and a network component 724. While computing device 700 is depicted as a seemingly single device, multiple computing devices 700 may work together and share the depicted device resources. For example, memory 712 may be distributed across multiple devices, and processor(s) 714 may be housed within different devices.

Bus 710 represents what may be one or more buses (such as an address bus, data bus, or a combination thereof). Although the various blocks of FIG. 7 are shown with lines for the sake of clarity, delineating various components may be accomplished with alternative representations. For example, a presentation component such as a display device is an I/O component in some examples, and some examples of processors have their own memory. Distinction is not made between such categories as "workstation," "server," "laptop," "hand-held device," etc., as all are contemplated within the scope of FIG. 7 and the references herein to a "computing device." Memory 712 may take the form of the computer storage media referenced below and operatively provide storage of computer-readable instructions, data structures, program modules and other data for the computing device 700. In some examples, memory 712 stores one or more of an operating system, a universal application platform, or other program modules and program data. Memory 712 is thus able to store and access data 712a and instructions 712b that are executable by processor 714 and configured to carry out the various operations disclosed herein. Thus, computing device 700 comprises a computer storage device having computer-executable instructions 712b stored thereon.

In some examples, memory 712 includes computer storage media. Memory 712 may include any quantity of memory associated with or accessible by the computing device 700. Memory 712 may be internal to the computing device 700 (as shown in FIG. 7), external to the computing device 700 (not shown), or both (not shown). Additionally, or alternatively, the memory 712 may be distributed across multiple computing devices 700, for example, in a virtualized environment in which instruction processing is carried out on multiple computing devices 700. For the purposes of this disclosure, "computer storage media," "computer storage memory," "memory," and "memory devices" are synonymous terms for the memory 712, and none of these terms include carrier waves or propagating signaling.

Processor(s) 714 may include any quantity of processing units that read data from various entities, such as memory 712 or I/O components 720. Specifically, processor(s) 714 are programmed to execute computer-executable instructions for implementing aspects of the disclosure. The instructions may be performed by the processor, by multiple processors within the computing device 700, or by a processor external to computing device 700. In some examples, the processor(s) 714 are programmed to execute instructions such as those illustrated in the flow charts discussed below and depicted in the accompanying drawings. Presentation component(s) 716 present data indications to a user or other device. Exemplary presentation components include a display device, speaker, printing component, vibrating component, etc. One skilled in the art will understand and appreciate that computer data may be presented in a number of ways, such as visually in a graphical user interface (GUI), audibly through speakers, wirelessly between computing devices 700, across a wired connection, or in other ways. I/O ports 718 allow computing device 700 to be logically coupled to other devices including I/O components 720, some of which may be built in. Example I/O components 720 include, for example but without limitation, a microphone, joystick, game pad, satellite dish, scanner, printer, wireless device, etc.

Computing device 700 may operate in a networked environment via the network component 724 using logical connections to one or more remote computers. In some examples, the network component 724 includes a network interface card and/or computer-executable instructions (e.g., a driver) for operating the network interface card. Communication between the computing device 700 and other devices may occur using any protocol or mechanism over any wired or wireless connection. In some examples, network component 724 is operable to communicate data over public, private, or hybrid (public and private) using a transfer protocol, between devices wirelessly using short range communication technologies (e.g., near-field communication (NFC), Bluetooth^{™} branded communications, or the like), or a combination thereof. Network component 724 communicates over wireless communication link 726 and/or a wired communication link 726a to a remote resource 728 (e.g., a cloud resource) across a computer network 730. Various different examples of communication links 726 and 726a include a wireless connection, a wired connection, and/or a dedicated link, and in some examples, at least a portion is routed through the internet.

Although described in connection with an example computing device 700, examples of the disclosure are capable of implementation with numerous other general-purpose or special-purpose computing system environments, configurations, or devices. Examples of well-known computing systems, environments, and/or configurations that may be suitable for use with aspects of the disclosure include, but are not limited to, smart phones, mobile tablets, mobile computing devices, personal computers, server computers, hand-held or laptop devices, multiprocessor systems, gaming consoles, microprocessor-based systems, set top boxes, programmable consumer electronics, mobile telephones, mobile computing and/or communication devices in wearable or accessory form factors (e.g., watches, glasses, headsets, or earphones), network PCs, minicomputers, mainframe computers, distributed computing environments that include any of the above systems or devices, virtual reality (VR) devices, augmented reality (AR) devices, mixed reality devices, holographic devices, and the like. Such systems or devices may accept input from the user in any way, including from input devices such as a keyboard or pointing device, via gesture input, proximity input (such as by hovering), and/or via voice input.

Examples of the disclosure may be described in the general context of computer-executable instructions, such as program modules, executed by one or more computers or other devices in software, firmware, hardware, or a combination thereof. The computer-executable instructions may be organized into one or more computer-executable components or modules. Generally, program modules include, but are not limited to, routines, programs, objects, components, and data structures that perform particular tasks or implement particular abstract data types. Aspects of the disclosure may be implemented with any number and organization of such components or modules. For example, aspects of the disclosure are not limited to the specific computer-executable instructions, or the specific components or modules illustrated in the figures and described herein. Other examples of the disclosure may include different computer-executable instructions or components having more or less functionality than illustrated and described herein. In examples involving a general-purpose computer, aspects of the disclosure transform the general-purpose computer into a special-purpose computing device when configured to execute the instructions described herein.

By way of example and not limitation, computer readable media comprise computer storage media and communication media. Computer storage media include volatile and nonvolatile, removable and non-removable memory implemented in any method or technology for storage of information such as computer readable instructions, data structures, program modules, or the like. Computer storage media are tangible and mutually exclusive to communication media. Computer storage media are implemented in hardware and exclude carrier waves and propagated signals. Computer storage media for purposes of this disclosure are not signals per se. Exemplary computer storage media include hard disks, flash drives, solid-state memory, phase change random-access memory (PRAM), static random-access memory (SRAM), dynamic random-access memory (DRAM), other types of random-access memory (RAM), read-only memory (ROM), electrically erasable programmable read-only memory (EEPROM), flash memory or other memory technology, compact disk read-only memory (CD-ROM), digital versatile disks (DVD) or other optical storage, magnetic cassettes, magnetic tape, magnetic disk storage or other magnetic storage devices, or any other non-transmission medium that may be used to store information for access by a computing device. In contrast, communication media typically embody computer readable instructions, data structures, program modules, or the like in a modulated data signal such as a carrier wave or other transport mechanism and include any information delivery media.

The order of execution or performance of the operations in examples of the disclosure illustrated and described herein is not essential, and may be performed in different sequential manners in various examples. For example, it is contemplated that executing or performing a particular operation before, contemporaneously with, or after another operation is within the scope of aspects of the disclosure. When introducing elements of aspects of the disclosure or the examples thereof, the articles "a," "an," "the," and "said" are intended to mean that there are one or more of the elements. The terms "comprising," "including," and "having" are intended to be inclusive and mean that there may be additional elements other than the listed elements. The term "exemplary" is intended to mean "an example of." The phrase "one or more of the following: A, B, and C" means "at least one of A and/or at least one of B and/or at least one of C."

Having described aspects of the disclosure in detail, it will be apparent that modifications and variations are possible without departing from the scope of aspects of the disclosure as defined in the appended claims. As various changes could be made in the above constructions, products, and methods without departing from the scope of aspects of the disclosure, it is intended that all matter contained in the above description and shown in the accompanying drawings shall be interpreted as illustrative and not in a limiting sense.

## Claims

1. A computer-implemented method comprising:
generating (602), by a container orchestration monitoring pod (122), a load (202) to apply against a monitored platform (104), wherein a monitored software executes on the monitored platform, wherein the container orchestration monitoring pod comprises a plurality of operators (124), and wherein the load is set to a first predetermined level (204a) according to a configuration map (300);
generating (604), by the plurality of operators, first metrics (130a) indicating performance of the monitored platform at the first predetermined level;
exporting (606) the first metrics to an assessment service (136);
while the container orchestration monitoring pod and the monitored software continue to execute, tuning (608) the load from the first predetermined level to a second predetermined level (204b), wherein tuning the load comprises changing a parameter (311) within the configuration map;
generating (610), by the plurality of operators, second metrics (130b) indicating performance of the monitored platform at the second predetermined level; and
exporting (612) the second metrics to the assessment service.

2. The computer-implemented method of claim 1, further comprising:
generating, by the assessment service, a performance report for the monitored platform using the first metrics and/or the second metrics;
correlating a performance change indicated within the performance report with an event experienced by the monitored platform; and
based on at least the performance change, altering a software instruction within the monitored software.

3. The computer-implemented method of claim 1, further comprising:
generating the first metrics and the second metrics concurrently with a customer workload executing on the monitored platform, wherein generating the first metrics and the second metrics concurrently with the customer workload executing provides a performance level indication for the monitored platform.

4. The computer-implemented method of claim 1, further comprising:
generating the first metrics and the second metrics concurrently with triggering faults on the monitored platform, wherein generating the first metrics and the second metrics concurrently with triggering the faults comprises at least a portion of resiliency testing for the monitored platform.

5. The computer-implemented method of claim 1,
wherein the parameters within the configuration map comprise a first parameter indicating, for a first operator of the plurality of operators, an on/off status and/or another parameter for operator events;
wherein tuning the load from the first predetermined level to the second predetermined level comprises changing the first parameter to:
toggle the first operator between off and on; or
change the parameter for operator events of the first operator; and
wherein the first metrics and/or the second metrics indicate either a performance level or success versus failure for the first operator.

6. The computer-implemented method of claim 5, further comprising:
monitoring, by the first operator, on an ongoing basis, the first parameter for a change.

7. The computer-implemented method of claim 1, wherein the plurality of operators comprises at least two operators selected from the list consisting of:
a storage read/write operation, a storage data integrity check, a network availability check, and a domain name server (DNS) check.

8. The computer-implemented method of claim 7,
wherein the plurality of operators comprises the network availability check; and
wherein the network availability check comprises the container orchestration monitoring pod pinging another container orchestration monitoring pod.

9. The computer-implemented method of claim 7,
wherein the plurality of operators comprises the storage read/write operation; and
wherein the storage read/write operation performs read and/or write operations at a specified rate.

10. The computer-implemented method of claim 1,
wherein the container orchestration monitoring pod comprises a Kubernetes pod; and
wherein the monitored platform comprises a cloud-based platform.

11. A system comprising:
a processor; and
a computer-readable medium storing instructions that are operative upon execution by the processor to:
generate (602), by a container orchestration monitoring pod (122), a load (202) to apply against a monitored platform (104), wherein a monitored software executes on the monitored platform, wherein the container orchestration monitoring pod comprises a plurality of operators (124), and wherein the load is set to a first predetermined level (204a) according to a configuration map (300);
generate (604), by the plurality of operators, first metrics (130a) indicating performance of the monitored platform at the first predetermined level;
export (606) the first metrics to an assessment service (136);
while the container orchestration monitoring pod and the monitored software continue to execute, tune (608) the load from the first predetermined level to a second predetermined level (204b), wherein tuning the load comprises changing a parameter (311) within the configuration map;
generate (610), by the plurality of operators, second metrics (130b) indicating performance of the monitored platform at the second predetermined level; and
export (612) the second metrics to the assessment service.

12. The system of claim 11, wherein the instructions are further operative to:
generate the first metrics and the second metrics concurrently with a customer workload executing on the monitored platform, wherein generating the first metrics and the second metrics concurrently with the customer workload executing provides a performance level indication for the monitored platform; or
generate the first metrics and the second metrics concurrently with triggering faults on the monitored platform, wherein generating the first metrics and the second metrics concurrently with triggering the faults comprises at least a portion of resiliency testing for the monitored platform.

13. The system of claim 11,
wherein the parameters within the configuration map comprise a first parameter indicating, for a first operator of the plurality of operators, an on/off status and/or another parameter for operator events;
wherein tuning the load from the first predetermined level to the second predetermined level comprises changing the first parameter to:
toggle the first operator between off and on; or
change the parameter for operator events of the first operator; and
wherein the first metrics and/or the second metrics indicate a performance level or success versus failure for the first operator.

14. The system of claim 13, wherein the instructions are further operative to:
monitor, by the first operator, on an ongoing basis, the first parameter for a change.

15. A computer storage device having computer-executable instructions stored thereon, which, on execution by a computer, cause the computer to perform operations comprising the method of any of claims 1-10.
